(19) Europäisches Patentamt / European Patent Office / Office européen des brevets

(11) **EP 3 808 142 B1**

(12) **FASCICULE DE BREVET EUROPEEN**

(45) Date de publication et mention de la délivrance du brevet:
**03.08.2022 Bulletin 2022/31**

(21) Numéro de dépôt: **19742445.0**

(22) Date de dépôt: **17.06.2019**

(51) Classification Internationale des Brevets (IPC):
**H04W 64/00** *(2009.01)* **G01S 5/02** *(2010.01)*
**G01S 5/00** *(2006.01)* **G01S 19/42** *(2010.01)*

(52) Classification Coopérative des Brevets (CPC):
**H04W 64/00; G01S 5/0036; G01S 5/02; G01S 19/42**

(86) Numéro de dépôt international:
**PCT/FR2019/051461**

(87) Numéro de publication internationale:
**WO 2019/243719 (26.12.2019 Gazette 2019/52)**

(54) **PROCÉDÉ ET SYSTÈME DE GÉOLOCALISATION D'UN TERMINAL D'UN SYSTÈME DE COMMUNICATION SANS FIL**

VERFAHREN UND SYSTEM ZUR GEOLOKALISIERUNG EINES ENDGERÄTS EINES DRAHTLOSKOMMUNIKATIONSSYSTEMS

METHOD AND SYSTEM FOR GEOLOCATING A TERMINAL OF A WIRELESS COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2018 FR 1855328**

(43) Date de publication de la demande:
**21.04.2021 Bulletin 2021/16**

(73) Titulaire: **Sigfox**
**31670 Labege (FR)**

(72) Inventeur: **HUBERT, Loïc**
**31410 Saint-Sulpice-Sur-Lèze (FR)**

(74) Mandataire: **Ipside**
**6, Impasse Michel Labrousse**
**31100 Toulouse (FR)**

(56) Documents cités:
**US-A1- 2017 180 928**

**Description**

## DOMAINE TECHNIQUE

La présente invention concerne un procédé et un système de géolocalisation d'un terminal d'un système de communication sans fil. L'invention est particulièrement bien adaptée au contexte de l'Internet des Objets dans les applications nécessitant de la géolocalisation.

## ÉTAT DE LA TECHNIQUE

Il existe actuellement de nombreuses solutions permettant de déterminer la position géographique d'un terminal d'un système de communication sans fil.

Par exemple, le terminal peut embarquer un dispositif de positionnement lui permettant de déterminer sa position géographique. Le terminal peut alors émettre un message indiquant cette position géographique à destination d'un réseau d'accès du système de communication sans fil.

Une telle solution présente toutefois l'inconvénient que la transmission de l'information sur la position géographique au réseau d'accès peut être coûteuse en termes de taille de données (nombre de bits utilisés pour encoder cette information). En effet, dans des systèmes de communication sans fil à bas débit et faible consommation électrique pour l'Internet des Objets, les débits binaires sont par construction faibles, généralement compris entre quelques dizaines de bits par seconde et quelques kilobits par seconde. Dans de tels systèmes, il est nécessaire de limiter le nombre de bits dans les messages échangés entre un terminal et le réseau d'accès dans le but de réduire d'une part la durée d'occupation de la bande fréquentielle utilisée afin de préserver les ressources radio du système, et d'autre part la durée d'émission d'un message afin de limiter la consommation électrique du terminal.

D'autres solutions reposent sur des méthodes implémentées au niveau du réseau d'accès pour estimer la position géographique d'un terminal.

Il s'agit par exemple des méthodes de multilatération basée sur des mesures de temps de propagation d'un signal radio échangé entre le terminal et une ou plusieurs stations de base du réseau d'accès (méthodes de type TOA pour l'acronyme anglais de « *Time Of Arrival* », ou de type TDOA pour l'acronyme anglais « *Time Difference Of Arrival* »).

D'autres méthodes connues de multilatération se basent sur un niveau de puissance reçue (ou RSSI pour « *Received Signal Strength Indicator* » en anglais) pour un signal radio échangé entre le terminal et le réseau d'accès.

Il est également connu de déterminer la position géographique du terminal à partir de la position géographique d'une ou plusieurs stations de base sous la couverture desquels se trouve le terminal.

Selon encore un autre exemple, des méthodes d'apprentissage automatique peuvent permettre de déterminer la position géographique d'un terminal à partir d'une signature radio du terminal à cette position (ces méthodes sont connues dans la littérature anglo-saxonne sous le terme de « *fingerprinting* »). Le document US 2017/180928 A1 décrit une méthode d'implémentation de l'ordinateur et du système pour gérer les informations de localisation d'un appareil électronique envoyant un événement d'identification spécifique associé.

Ces méthodes d'estimation de la position géographique d'un terminal par le réseau d'accès sont néanmoins souvent imprécises. La précision de la position géographique du terminal estimée par le réseau d'accès est en effet généralement moins bonne que la précision de la position géographique que peut obtenir le terminal via le dispositif de positionnement qu'il embarque.

## EXPOSÉ DE L'INVENTION

La présente invention a pour objectif de remédier à tout ou partie des inconvénients de l'art antérieur, notamment ceux exposés ci-avant, en proposant une solution qui permette de déterminer la position géographique d'un terminal d'un système de communication sans fil de manière précise tout en limitant la quantité d'information échangée entre le terminal et un réseau d'accès du système de communication.

A cet effet, et selon un premier aspect, il est proposé par la présente invention, un procédé de géolocalisation d'un terminal d'un système de communication sans fil. Le système de communication sans fil comprend un réseau d'accès configuré pour estimer une position géographique approximative dudit terminal. Le terminal comprend un dispositif de positionnement permettant d'obtenir une position géographique précise du terminal dont la précision est meilleure que la précision de la position géographique approximative estimée par le réseau d'accès. Le procédé comporte les étapes suivantes :

- un calcul par le terminal d'une information tronquée de la position géographique précise en décomposant ladite position géographique précise en une première partie et une seconde partie, la première partie variant moins vite que la seconde partie lors d'un déplacement du terminal, l'information tronquée étant représentative de la seconde partie de la position géographique précise,
- une émission par le terminal de l'information tronquée dans un message à destination du réseau d'accès,
- une estimation de la position géographique approximative du terminal par le réseau d'accès,
- une extraction par le réseau d'accès de l'information tronquée à partir du message reçu en provenance du terminal,
- une détermination par le réseau d'accès de la position géographique précise du terminal à partir de l'information tronquée et de la position géographique approximative.

De telles dispositions permettent de limiter la taille des messages échangés entre le terminal et le réseau d'accès. En effet, seule une partie tronquée de l'information sur la position géographique précise obtenue par le terminal est transmise au réseau d'accès par le terminal. Le réseau d'accès est configuré pour déterminer la position géographique précise du terminal en combinant l'information tronquée reçue du terminal avec la position géographique approximative estimée par le réseau d'accès.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, la position géographique comprend une latitude et une longitude en tant que coordonnées géographiques.

Dans des modes particuliers de mise en œuvre :

- la latitude et la longitude correspondent chacune à une valeur encodée respectivement sur N et M bits,
- la latitude $Lat_1$ et la longitude $Lng_1$ de la position géographique précise obtenue par le terminal s'écrivent sous la forme :

$$Lat_1 = N_1 \times 2^n + n_1$$

$$Lng_1 = M_1 \times 2^m + m_1$$

où $N_1$, $n_1$, $n$, $M_1$, $m_1$ et $m$ sont des nombres entiers positifs, $n_1$ et $m_1$ correspondant respectivement aux $n$ bits de poids faible de la latitude $Lat_1$ et aux $m$ bits de poids faible de la longitude $Lng_1$ de la position géographique précise obtenue par le terminal,
- la latitude $Lat_2$ et la longitude $Lng_2$ de la position géographique approximative estimée par le réseau d'accès s'écrivent sous la forme :

$$Lat_2 = N_2 \times 2^n + n_2$$

$$Lng_2 = M_2 \times 2^m + m_2$$

où $N_2$, $n_2$, $M_2$ et $m_2$ sont des nombres entiers positifs, $n_2$ et $m_2$ correspondant respectivement aux $n$ bits de poids faible de la latitude $Lat_2$ et aux $m$ bits de poids faible de la longitude $Lng_2$ de la position géographique approximative estimée par le réseau d'accès,
- l'information tronquée comporte les $n$ bits de poids faible de la latitude $Lat_1$ et les $m$ bits de poids faible de la longitude $Lng_1$ de la position géographique précise obtenue par le terminal,
- la détermination par le réseau d'accès de la position géographique précise du terminal à partir de l'information tronquée et de la position géographique approximative comprend :

  ○ une détermination de la latitude $Lat_1$ en fonction de $N_2$ et de $n_1$,
  ○ une détermination de la longitude $Lng_1$ en fonction de $M_2$ et de $m_1$.

Dans des modes particuliers de mise en œuvre :

- les nombres $n$ et $m$ sont choisis de sorte que la précision de la position géographique approximative estimée par le réseau d'accès est telle que quelle que soit la position géographique du terminal les formules suivantes sont vérifiées :

$$|Lat_1 - Lat_2| < 2^{(n-1)}$$

$$|Lng_1 - Lng_2| < 2^{(m-1)}$$

- la détermination par le réseau d'accès de la position géographique précise du terminal à partir de l'information tronquée et de la position géographique approximative comprend :

    o une détermination de la latitude $Lat_1$ selon :

$$Lat_1 = \begin{cases} (N_2 + 1) \times 2^n + n_1 \ si \ (n_1 - n_2) \leq (-1) \times 2^{(n-1)} \\ (N_2 - 1) \times 2^n + n_1 \ si \ (n_1 - n_2) \geq 2^{(n-1)} \\ N_2 \times 2^n + n_1 \ sinon \end{cases}$$

    o une détermination de la longitude $Lng_1$ selon :

$$Lng_1 = \begin{cases} (M_2 + 1) \times 2^m + m_1 \ si \ (m_1 - m_2) \leq (-1) \times 2^{(m-1)} \\ (M_2 - 1) \times 2^m + m_1 \ si \ (m_1 - m_2) \geq 2^{(m-1)} \\ M_2 \times 2^m + m_1 \ sinon \end{cases}$$

Dans des modes particuliers de mise en œuvre, l'estimation de la position géographique approximative par le réseau d'accès est obtenue par une des méthodes suivantes :

- une méthode de multilatération basée sur le temps de propagation d'un signal radio échangé entre le terminal et le réseau d'accès,
- une méthode de multilatération basée sur un niveau de puissance reçue pour un signal radio échangé entre le terminal et le réseau d'accès,
- une détermination de la position géographique du terminal à partir de la position géographique d'une ou plusieurs stations de base sous la couverture desquelles se trouve le terminal,
- une méthode d'apprentissage automatique permettant d'associer une signature radio à une position géographique.

Dans des modes particuliers de mise en œuvre, le réseau d'accès est un réseau étendu sans fil basse consommation.

Un tel réseau d'accès est connu dans la littérature anglo-saxonne sous l'acronyme LPWAN pour « *Low Power Wide Area Network* ». Particulièrement bien adapté pour les applications de type « objets connectés », il permet des échanges de données sur des distances pouvant aller de quelques kilomètres à plusieurs dizaines voire plusieurs centaines de kilomètres avec des débits variant de quelques dizaines de bits par seconde jusqu'à quelques centaines de kilobits par seconde.

Selon un deuxième aspect, la présente invention concerne un terminal d'un système de communication sans fil comportant un dispositif de positionnement permettant d'obtenir une position géographique précise du terminal, le terminal étant configuré pour :

- calculer une information tronquée de la position géographique précise en décomposant ladite position géographique précise en une première partie et une seconde partie, la première partie variant moins vite que la seconde partie lors d'un déplacement du terminal, l'information tronquée étant représentative de la seconde partie de la position géographique précise,
- émettre l'information tronquée dans un message à destination d'un réseau d'accès du système de communication sans fil.

Selon un troisième aspect, la présente invention concerne un réseau d'accès d'un système de communication sans fil. Le système de communication sans fil comprend un terminal selon l'un quelconque des modes de réalisation précédents, et le réseau d'accès est configuré pour :

- estimer une position géographique approximative du terminal,
- extraire l'information tronquée à partir du message reçu en provenance du terminal,
- déterminer la position géographique précise du terminal à partir de l'information tronquée et de la position géographique approximative.

Selon un quatrième aspect, la présente invention concerne un système de communication sans fil comprenant un terminal et un réseau d'accès selon l'un quelconques des modes de réalisation précédent.

## PRÉSENTATION DES FIGURES

L'invention sera mieux comprise à la lecture de la description suivante, donnée à titre d'exemple nullement limitatif, et faite en se référant aux figures 1 à 5 qui représentent :

- Figure 1 : une représentation schématique d'un système de communication sans fil,
- Figure 2 : une représentation schématique des principales étapes d'un procédé de géolocalisation selon l'invention,
- Figures 3 et 4 : des représentations schématiques d'une latitude d'une position géographique d'un terminal,
- Figure 5 : une représentation schématique d'une position géographique d'un terminal dans un territoire quadrillé en différentes régions et différentes zones.

Dans ces figures, des références identiques d'une figure à une autre désignent des éléments identiques ou analogues. Pour des raisons de clarté, les éléments représentés ne sont pas nécessairement à une même échelle, sauf mention contraire.

## DESCRIPTION DÉTAILLÉE DE MODES DE RÉALISATION

La présente invention trouve une application particulièrement avantageuse, bien que nullement limitative, dans les systèmes de communication sans fil pour l'Internet des Objets (« *Internet of Things* » ou IoT dans la littérature anglo-saxonne) ou pour des applications du type M2M (acronyme anglo-saxon pour « *Machine-to-Machine* »).

Dans un tel système de communication sans fil, les débits binaires sont par construction faibles, généralement inférieurs à quelques centaines de kilobits par seconde.

En particulier, dans des systèmes de communication sans fil à bande ultra étroite, les débits binaires sont généralement compris entre quelques dizaines de bits par seconde et quelques kilobits par seconde. Par « bande ultra étroite » (« *Ultra Narrow Band* » ou UNB dans la littérature anglo-saxonne), on entend que le spectre fréquentiel instantané des signaux radioélectriques émis par les terminaux est de largeur fréquentielle inférieure à un kilohertz. Le réseau d'accès d'un tel système de communication est un réseau étendu sans fil à basse consommation de type LPWAN.

Pour optimiser la capacité du réseau, il est avantageux de limiter le nombre de bits dans les messages échangés entre les terminaux et le réseau d'accès, car cela permet de réduire la durée des messages, et par conséquent de réduire la durée d'occupation de la bande fréquentielle utilisée pour échanger des données entre les terminaux et le réseau d'accès.

Une telle limitation du nombre de bits dans les messages est également souhaitée du fait que la limitation de la durée des messages échangés entraîne une réduction de la consommation électrique du terminal puisque le terminal est en mode actif pour une émission ou une réception moins longtemps.

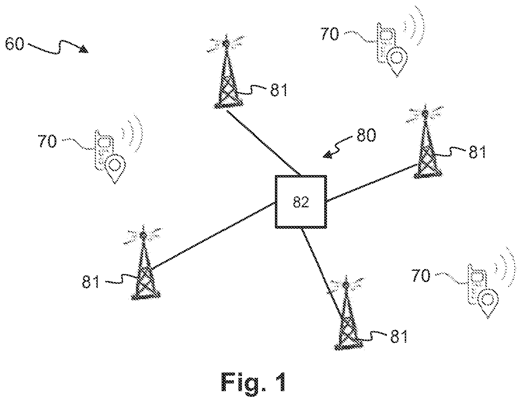

La figure 1 représente schématiquement un système 60 de communication sans fil, par exemple de type UNB, comportant plusieurs terminaux 70 et un réseau d'accès 80 comportant plusieurs stations de base 81.

Les terminaux 70 et les stations de base 81 du réseau d'accès 80 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

A cette fin, chaque terminal 70 comporte, de manière conventionnelle, un module de communication adapté pour envoyer un signal radio comportant un message à destination du réseau d'accès 80, et pour recevoir un signal radio comportant un message en provenance du réseau d'accès 80.

De manière similaire, chaque station de base 81 du réseau d'accès 80 comporte, de manière conventionnelle, un module de communication adapté pour envoyer un signal radio comportant un message à destination d'un terminal 70, et pour recevoir un signal radio comportant un message en provenance d'un terminal 70.

Les terminaux 70 sont adaptés à émettre des messages montants sur un lien montant à destination du réseau d'accès 80. Les messages montants sont par exemple émis de façon asynchrone. Par « émettre de façon asynchrone », on entend que les terminaux 70 déterminent de manière autonome quand ils émettent, sans coordination desdits terminaux 70 entre eux et avec les stations de base 81 du réseau d'accès 80.

Chaque station de base 81 est adaptée à recevoir les messages montants des terminaux 70 qui se trouvent à sa portée. Chaque message montant ainsi reçu est par exemple transmis à un serveur 82 du réseau d'accès 80, éventuellement accompagné d'autres informations comme un identifiant de la station de base 81 qui l'a reçu, la puissance mesurée dudit message montant reçu, la date de réception dudit message montant, etc. Le serveur 82 traite par exemple l'ensemble des messages montants reçus des différentes stations de base 81.

Dans l'exemple considéré, le réseau d'accès 80 est configuré pour pouvoir estimer une position géographique approximative d'un terminal 70.

L'estimation de la position géographique approximative du terminal 70 est par exemple mise en œuvre par le serveur 82 du réseau d'accès. A cette fin, le serveur 82 comporte par exemple circuit de traitement comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre une partie au moins des étapes d'un procédé de géolocalisation d'un terminal 70 du système 60 de communication sans fil. Alternativement ou en complément, le circuit de traitement du serveur 82 comporte un ou des circuits logiques programmables (FGPA, PLD, etc.), et/ou un ou des circuits intégrés spécialisés (ASIC), et/ou un ensemble de composants électroniques discrets, etc., adaptés à mettre en œuvre lesdites étapes du procédé de géolocalisation.

Dans ce but, plusieurs méthodes sont connues. Par exemple, le réseau d'accès 80 peut estimer la position géographique approximative du terminal 70 comme étant la position géographique d'une station de base 81 qui a reçu un message émis par le terminal 70. Si plusieurs stations de base 81 peuvent recevoir un message émis par le terminal 70, il est également envisageable d'estimer la position géographique approximative du terminal 70 en fonction des positions géographiques de toutes les stations de base 81 qui ont reçu le message émis par le terminal 70 (par exemple en définissant un barycentre de ces positions géographiques).

Selon un autre exemple, le réseau d'accès 80 peut estimer les distances qui séparent le terminal 70 d'une ou plusieurs stations de base 81 en calculant le temps de propagation d'un signal émis par le terminal 70 à destination des stations de base 81 à partir des temps d'arrivée (TOA, « *Time Of Arrivai* ») ou des différences de temps d'arrivée (TDOA, « *Time Différence Of Arrivai* ») de ce signal au niveau des différentes stations de base 81. Il est alors ensuite possible d'estimer la position du terminal 70 par multilatération si les positions géographiques des stations de base 81 sont connues.

Selon un autre exemple, il est possible d'estimer la position du terminal 70 par multilatération en déterminant les distances qui séparent le terminal 70 de plusieurs stations de base 81 à partir d'un niveau de puissance reçue (RSSI, « *Received Signal Strength Indicator* ») par chaque station de base 81 pour un message émis par le terminal 70 à destination du réseau d'accès 80. Cette méthode repose sur le fait qu'un signal radio est atténué de manière connue dans l'atmosphère, et que le niveau de puissance reçue pour un message transporté par un signal varie donc lui aussi de manière connue en fonction de la distance qui sépare le récepteur et l'émetteur du signal.

Selon encore un autre exemple, la méthode d'estimation d'une position géographique approximative du terminal 70 par le réseau d'accès 80 peut reposer sur des techniques d'apprentissage automatique (« *Machine Learning* » dans la littérature anglo-saxonne) qui associent une empreinte (« *fingerprint »)* à une position de la zone géographique considérée. Une telle méthode se base sur l'hypothèse qu'un niveau de puissance reçue par une station de base 81 pour un message émis par le terminal 70 située à une position donnée est stable dans le temps. Concrètement, il s'agit de construire pendant une première phase de calibration, une base de données qui associe à des positions géographiques connues une « signature radio » correspondant à l'ensemble des niveaux RSSI mesurés pour un terminal 70 à la position considérée pour un ensemble de stations de base 81 du système 60. Ensuite, pendant une phase de recherche, une signature radio observée pour le terminal 70 dont on cherche à estimer la position est comparée à l'ensemble des signatures de la base de données afin d'estimer la position géographique du terminal 70 à partir de la (ou des) position(s) géographiques correspondant à la (aux) signature(s) la (les) plus ressemblante(s) à la signature radio observée.

La précision de la position géographique approximative estimée par le réseau d'accès 80 est cependant parfois insuffisante pour certaines applications.

Dans l'exemple considéré, le terminal 70 embarque un dispositif de positionnement permettant d'obtenir une position géographique précise du terminal 70.

Il s'agit par exemple d'un système de positionnement par satellites (système GNSS pour « *Global Navigation Satellite System* ») tel qu'un récepteur GPS (« *Global Positioning System »).*

La précision de la position géographique obtenue par le terminal 70 à partir du dispositif de positionnement est meilleure que la précision de la position géographique approximative estimée par le réseau d'accès 80. On en entend par là que la distance entre la position géographique exacte du terminal 70 et la position géographique obtenue par le dispositif de positionnement est généralement inférieure à la distance entre la position géographique exacte du terminal 70 et la position géographique approximative estimée par le réseau d'accès 80.

Dans un premier mode de mise en œuvre, la position géographique du terminal 70 comprend une latitude et une longitude en tant que coordonnées géographique.

A titre d'exemple nullement limitatif, la latitude et la longitude d'une position géographique sont encodées sur 24 bits ($N = M = 24$). Le bit de poids fort correspond à un bit de signe tandis que les 23 bits de poids faible correspondent à des bits de données encodant des valeurs comprises entre 0 et $2^{23} - 1 = 8\ 388\ 607$.

Pour passer à une valeur standard de latitude comprise dans un intervalle ]-90°; 90°], il convient de noter que les 23 bits de donnée permettent d'obtenir une granularité d'environ $1{,}07 \times 10^{-5}$ degrés d'arc par unité. Sachant que la distance à la surface du globe terrestre correspondant à un degré d'arc est d'environ 110 kms, l'utilisation de 24 bits pour encoder une valeur de latitude permet de définir une latitude avec une précision de l'ordre de 1,2 mètres au niveau de la surface du globe terrestre.

De même, pour passer à une valeur standard de longitude comprise dans un intervalle ]-180°; 180°] il convient de noter que les 23 bits de donnée permettent d'obtenir une granularité d'environ $2{,}15 \times 10^{-5}$ degrés d'arc par unité. L'utilisation de 24 bits pour encoder une valeur de longitude permet de définir une longitude avec une précision de l'ordre de 2,4 mètres au niveau de la surface du globe terrestre.

A titre de comparaison :

- si la longitude était encodée sur 16 bits avec un bit de signe et 15 bits de données, alors la granularité serait de $5{,}5 \times 10^{-3}$ degrés d'arc par unité, ce qui permettrait d'obtenir une précision de l'ordre de 604,3 mètres,
- si la longitude était encodée sur 8 bits avec un bit de signe et 7 bits de données, alors la granularité serait de 1,42 degrés d'arc par unité, ce qui permettrait d'obtenir une précision de l'ordre de 156 kilomètres,
- si la longitude était encodée sur 32 bits avec un bit de signe et 31 bits de données, alors la granularité serait de $8{,}4 \times 10^{-8}$ degrés d'arc par unité, ce qui permettrait d'obtenir une précision de l'ordre de un centimètre.

Une position géographique comportant une latitude et une longitude encodées chacune sur 24 bits permet d'obtenir une précision suffisante pour un grand nombre d'applications. Cela correspond cependant à six octets de données, ce qui représente une taille significative pour un message qui contiendrait cette information, notamment pour des applications de type IoT où l'on cherche à limiter au maximum la taille d'un message échangé entre un terminal 70 et le réseau d'accès 80.

Un objectif du procédé de géolocalisation selon l'invention est de réduire la taille des données émises par le terminal 70 concernant sa position géographique tout en permettant au réseau d'accès 80 de déterminer la position géographique du terminal 70 avec une précision équivalente à celle offerte par le dispositif de positionnement embarqué dans le terminal 70.

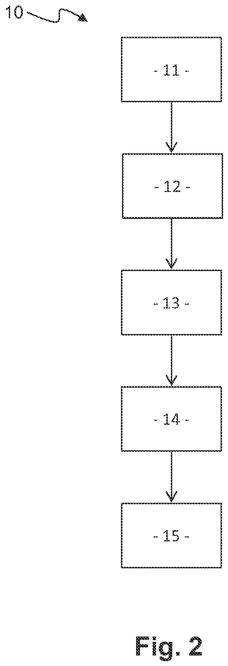

La figure 2 représente schématiquement les principales étapes d'un procédé 10 de géolocalisation selon l'invention.

Certaines étapes du procédé 10 de géolocalisation sont mises en œuvre par le réseau d'accès 80 (par exemple par le serveur 82 du réseau d'accès 80), d'autres étapes du procédé 10 de géolocalisation sont mises en œuvre par le terminal 70.

A cette fin, le terminal 70 comporte par exemple un circuit de traitement comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre une partie au moins des étapes du procédé 10 de géolocalisation selon l'invention. Alternativement ou en complément, le circuit de traitement du terminal 70 comporte un ou des circuits logiques programmables (FGPA, PLD, etc.), et/ou un ou des circuits intégrés spécialisés (ASIC), et/ou un ensemble de composants électroniques discrets, etc., adaptés à mettre en œuvre lesdites étapes du procédé de géolocalisation.

Une première étape du procédé 10 de géolocalisation comporte un calcul 11 par le terminal 70 d'une information tronquée d'une position géographique précise du terminal 70, obtenue par le dispositif de positionnement dudit terminal 70, en décomposant ladite position géographique précise en une première partie et une seconde partie, la première partie variant moins vite que la seconde partie lors d'un déplacement du terminal 70. L'information tronquée est représentative de la seconde partie de la position géographique précise du terminal 70.

Une deuxième étape du procédé 10 de géolocalisation comporte une émission 12 par le terminal 70 de l'information tronquée dans un message à destination du réseau d'accès 80.

Une troisième étape du procédé 10 de géolocalisation comporte une estimation 13 d'une position géographique approximative du terminal 70 par le réseau d'accès, par exemple en utilisant une des méthodes évoquées précédemment.

Une quatrième étape du procédé 10 de géolocalisation comporte une extraction 14 par le réseau d'accès 80 de l'information tronquée à partir du message reçu en provenance du terminal 70.

Une cinquième étape du procédé 10 de géolocalisation comporte une détermination 15 par le réseau d'accès 80 de la position géographique précise du terminal 70 à partir de l'information tronquée et de la position géographique approximative.

Il convient de noter que l'ordre des étapes décrites ci-avant n'est pas nécessairement figé.

Dans le premier mode de mise en œuvre, la latitude $Lat_1$ de la position géographique précise obtenue par le dispositif de positionnement du terminal 70 correspond par exemple à une valeur entière encodée sur N bits qui peut s'écrire sous la forme :

$$Lat_1 = N_1 \times 2^n + n_1$$

où $N_1$, $n_1$, et $n$ sont des nombres entiers positifs. Le nombre $n_1$ correspond ainsi à la valeur encodée par les $n$ bits de poids faible de la latitude $Lat_1$ *de* la position géographique précise du terminal 70, tandis que le nombre $N_1$ correspond à la valeur encodée par les *(N-n)* bits de poids fort de la latitude $Lat_1$ de la position géographique précise du terminal 70.

La longitude $Lng_1$ de la position géographique précise obtenue par le dispositif de positionnement du terminal 70 correspond par exemple à une valeur entière encodée sur M bits qui peut s'écrire sous la forme :

$$Lng_1 = M_1 \times 2^m + m_1$$

où $M_1$, $m_1$, et $m$ sont des nombres entiers positifs. Le nombre $m_1$ correspond ainsi à la valeur encodée par les $m$ bits de poids faible de la longitude $Lng_1$ de la position géographique précise du terminal 70, tandis que le nombre $M_1$ correspond à la valeur encodée par les *(M-m)* bits de poids fort de longitude $Lng_1$ de la position géographique précise du terminal 70.

De manière similaire, la latitude $Lat_2$ et la longitude $Lng_2$ de la position géographique approximative estimée par le réseau d'accès 80 peuvent s'écrire sous la forme :

$$Lat_2 = N_2 \times 2^n + n_2$$

$$Lng_2 = M_2 \times 2^m + m_2$$

où $N_2$, $n_2$, $M_2$, et $m_2$ sont des nombres entiers positifs, le nombre $n_2$ correspond à la valeur encodée par les $n$ bits de poids faible de la latitude $Lat_2$ de la position géographique approximative du terminal 70 estimée par le réseau d'accès 80, le nombre $N_2$ correspond à la valeur encodée par les *(N-n)* bits de poids fort de la latitude $Lat_2$ de la position géographique approximative estimée, le nombre $m_2$ correspond à la valeur encodée par les $m$ bits de poids faible de la longitude $Lng_2$ de la position géographique approximative estimée, et le nombre $M_2$ correspond à la valeur encodée par les *(M-m)* bits de poids fort de la longitude $Lng_2$ de la position géographique approximative estimée.

L'information tronquée comporte les $n$ bits de poids faible de la latitude $Lat_1$ et les $m$ bits de poids faible de la longitude $Lng_1$ de la position géographique précise obtenue par le terminal 70.

Lorsque le terminal 70 se déplace les bits de poids faible de la latitude $Lat_1$ et de la longitude $Lng_1$ de la position précise du terminal 70 varient plus rapidement que les bits de poids fort.

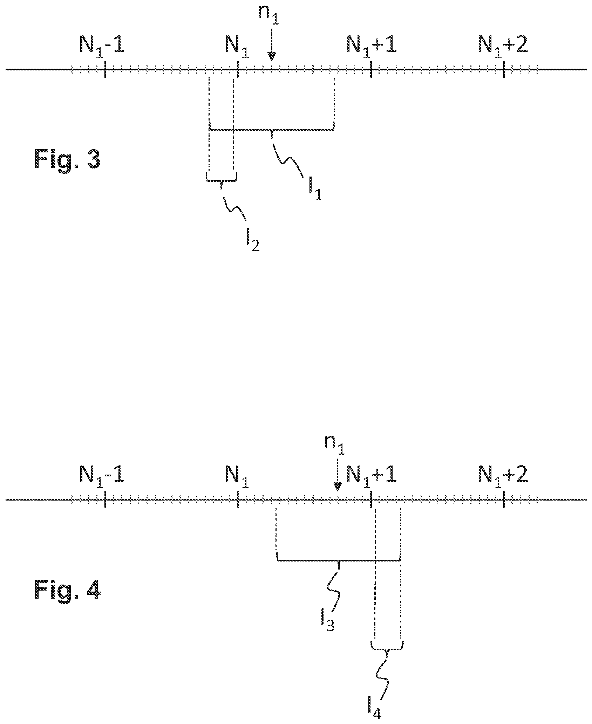

La figure 3 représente schématiquement un cas où n = 4. Il y a alors seize valeurs possibles pour le nombre $n_1$ qui varie entre zéro et quinze. Lorsque le terminal 70 se déplace par exemple entre une première latitude de valeur $N_1 \times 2^4$ jusqu'à une deuxième latitude de valeur *($N_1$ + 1)* $\times 2^4$, le nombre $n_1$ prend successivement les valeurs zéro à quinze.

Le réseau d'accès 80 peut déterminer la position géographique précise du terminal 70 en utilisant d'une part les valeurs $n_1$ et $m_1$ déterminées à partir de l'information tronquée extraite du message reçu du terminal 70, et d'autre part les valeurs $N_2$ et $M_2$ déterminées à partir de la position géographique approximative du terminal 70 estimée par le réseau d'accès 80.

En supposant par exemple que la précision de la position géographique précise obtenue par le terminal 70 et la précision de la position géographique approximative estimée par le réseau d'accès 80 sont telles que quelle que soit la position du terminal 70 les formules ci-dessous sont vérifiées :

$$|Lat_1 - Lat_2| < 2^{(n-1)} \qquad (1)$$

$$|Lng_1 - Lng_2| < 2^{(m-1)} \qquad (2)$$

alors, le réseau d'accès 80 peut déterminer la latitude $Lat_1$ et la longitude $Lng_1$ de la position géographique précise du terminal 70 comme suit :

$$Lat_1 = \begin{cases} (N_2 + 1) \times 2^n + n_1 & si\ (n_1 - n_2) \leq (-1) \times 2^{(n-1)} \\ (N_2 - 1) \times 2^n + n_1 & si\ (n_1 - n_2) \geq 2^{(n-1)} \\ N_2 \times 2^n + n_1 & sinon \end{cases} \qquad (3)$$

$$Lng_1 = \begin{cases} (M_2 + 1) \times 2^m + m_1 & si\ (m_1 - m_2) \leq (-1) \times 2^{(m-1)} \\ (M_2 - 1) \times 2^m + m_1 & si\ (m_1 - m_2) \geq 2^{(m-1)} \\ M_2 \times 2^m + m_1 & sinon \end{cases} \qquad (4)$$

Les figures 3 et 4 aident à mieux comprendre ces calculs.

Sur la figure 3, la formule (1) implique que le nombre $n2$ prend nécessairement une valeur dans l'intervalle $I_1$. Si $n2$ prend une valeur dans le sous-intervalle $I_2$ pour lequel $(n_1 - n_2) \leq (-1) \times 2^{(n-1)}$, alors cela signifie que $N_2 = (N_1 - 1)$. Sinon, cela signifie que $N_2 = N_1$.

Sur la figure 4, la formule (1) implique que le nombre $n2$ prend une valeur dans le sous-intervalle $I_3$. Si $n2$ prend une valeur dans l'intervalle $I_4$ pour lequel $(n_1 - n_2) \geq 2^{(n-1)}$, alors cela signifie que $N_2 = (N_1 + 1)$. Sinon, cela signifie que $N_2 = N_1$.

Il convient de noter que ce qui est décrit ci-dessus pour la latitude en référence aux figures 3 et 4 s'appliquent de manière similaire pour la longitude.

Il apparaît ainsi que le réseau d'accès 80 peut déterminer la position géographique précise ($Lat_1$, $Lng_1$) du terminal 70 à partir d'une part de l'information tronquée émise par le terminal 70 et d'autre part de la position géographique approximative du terminal 70 estimée par le réseau d'accès 80.

Il est ainsi possible pour le réseau d'accès 80 d'obtenir une position géographique précise du terminal 70 sans que le terminal 70 n'ait à émettre cette position géographique en entier. Il est ainsi possible de limiter la taille du message contenant l'information sur la position géographique du terminal 70 sans réduire la précision de la géolocalisation. Ceci permet alors d'optimiser la capacité du réseau ainsi que la consommation électrique du terminal 70.

Les nombres $n$ et $m$ peuvent être choisis en fonction de la précision de la position géographique approximative estimée par le réseau d'accès 80 et la précision de la position géographique précise obtenue par le terminal 70, de sorte que les formules (1) et (2) sont vérifiées.

Prenons par exemple les hypothèses suivantes :

- N = M = 24 bits,
- la précision de la position géographique précise obtenue par le terminal 70 est telle qu'une distance d'erreur entre la position géographique exacte du terminal 70 et la position géographique précise mesurée par le dispositif de positionnement du terminal 70 est inférieure à cinq mètres au niveau de la surface du globe terrestre,
- la précision de la position géographique approximative estimée par le réseau d'accès 80 est telle qu'une distance d'erreur entre la position géographique exacte du terminal 70 et la position géographique approximative estimée par le réseau d'accès 80 est inférieure à cent mètres au niveau de la surface du globe terrestre.

Avec de telles hypothèses, les formules (1) et (2) peuvent être vérifiées en choisissant n = m = 8. En effet, dans un tel cas, quelle que soit la position géographique du terminal 70, la distance au niveau de la surface du globe terrestre entre la position géographique précise obtenue par le terminal 70 et la position géographique approximative estimée par le réseau d'accès 80 est nécessairement inférieure à la somme de la distance d'erreur maximale (cinq mètres) pour la position géographique précise mesurée par le dispositif de positionnement du terminal 70 avec la distance d'erreur maximale (cent mètres) pour la position géographique approximative estimée par le réseau d'accès 80. Dans un tel cas, la latitude $Lat_1$ et la longitude $Lng_1$ de la position géographique précise obtenue par le terminal 70, et la latitude $Lat_2$ et la longitude $Lng_2$ de la position géographique approximative estimée par le réseau d'accès 80 sont nécessairement telles que :

$$|Lat_1 - Lat_2| < \frac{(100 + 5) \times (2^{23} - 1)}{110\,000 \times 90} \approx 89,0$$

$$|Lng_1 - Lng_2| < \frac{(100 + 5) \times (2^{23} - 1)}{110\,000 \times 180} \approx 44,5$$

Les formules (1) et (2) sont alors vérifiées en choisissant n = m = 8 (pour rappel, dans ces formules, le nombre 110 000 correspond à la distance approximative en mètres au niveau de la surface du globe terrestre correspondant à un degré d'arc).

Imaginons par exemple que la position géographique précise obtenue par le terminal 70 est :

$$(Lat_1, Lng_1) = (0x\ 3E\ 03\ D7, 0x\ 01\ 06\ D1).$$

où la notation « 0x » indique une représentation hexadécimale.

Les étapes du procédé 10 de géolocalisation selon l'invention décrites en référence à la figure 2 se déclinent alors de la manière suivante.

Le procédé 10 comporte tout d'abord un calcul 11 par le terminal 70 d'une information tronquée comportant les $n$ bits de poids faible de $Lat_1$ et les m bits de poids faible de $Lng_1$. Dans l'exemple considéré, on a :

$Lat_1 = N_1 \times 2^n + n_1$, avec $N_1$ = 0x 3E 03 et $n_1$ = 0x D7
$Lng_1 = M_1 \times 2^m + m_1$, avec $M_1$ = 0x 01 06 et $m_1$ = 0x D1

Les valeurs $n_1$ et $m_1$ correspondent respectivement aux valeurs encodées par les $n$ bits de poids faible de la latitude $Lat_1$ et les m bits de poids faible de la longitude $Lng_1$ de la position géographique précise obtenue par le terminal 70.

Le procédé 10 comporte ensuite une émission 12 par le terminal 70 de l'information tronquée dans un message à destination du réseau d'accès 80. Les $n$ bits de poids faible de la latitude $Lat_1$ et les m bits de poids faible de la longitude $Lng_1$ de la position géographique précise obtenue par le terminal 70 sont ainsi inclus dans un message émis à destination du réseau d'accès 80.

Le procédé 10 comporte ensuite une estimation 13 d'une position géographique approximative du terminal 70 par le réseau d'accès. Par exemple, la position géographique approximative estimée par le réseau d'accès 80 est :

$$(Lat_2, Lng_2) = (0x\ 3E\ 04\ 1A, 0x\ 01\ 06\ 6D)$$

Dans l'exemple considéré, on a donc :

$Lat_2 = N_2 \times 2^n + n_2$, avec $N_2$ = 0x 3E 04 et $n_2$ = 0x 1A
$Lng_2 = M_2 \times 2^m + m_2$, avec $M_2$ = 0x 01 06 et $m_2$ = 0x 6D

Le procédé 10 comporte ensuite une extraction 14 par le réseau d'accès 80, à partir du message reçu en provenance du terminal 70, de l'information tronquée.

Le procédé 10 comporte ensuite une détermination 15 par le réseau d'accès 80 de la position géographique précise du terminal 70 à partir de l'information tronquée et de la position géographique approximative en utilisant les formules (3) et (4) :

$$(n_1 - n_2) = 189 > 2^7 \Rightarrow Lat_1 = (N_2 - 1) \times 2^n + n_1$$

$$(m_1 - m_2) = 100 < 2^7 \Rightarrow Lng_1 = M_2 \times 2^m + m_1$$

On retrouve alors :

$$(Lat_1, Lng_1) = (0x\ 3E\ 03\ D7, 0x\ 01\ 06\ D1) = (43,60°N, 1,44°E)$$

Dans l'exemple précédent, le procédé 10 de géolocalisation selon l'invention permet de réduire la taille des données émises par le terminal 70 au réseau d'accès 80 (seulement 16 bits transmis au lieu 48 bits) tout en conservant une précision de géolocalisation équivalente.

Selon un autre exemple, le procédé 10 selon l'invention peut permettre d'augmenter la précision de géolocalisation du terminal 70 en conservant la même quantité de données émises. Par exemple, en choisissant N = M = 32 et $n = m = 24$, il est possible de définir une position géographique du terminal 70 avec une précision de l'ordre du centimètre (sous réserve que le dispositif de positionnement du terminal 70 permette une telle précision), et une précision de l'ordre de 35 kms est alors suffisante pour l'estimation de la position géographique approximative par le réseau d'accès 80.

Un autre avantage du procédé 10 de géolocalisation selon l'invention est qu'il ajoute de la confidentialité dans les données transmises dans la mesure où l'information tronquée émise dans un message par le terminal 70 à destination du réseau d'accès 80 n'est pas suffisante pour déterminer à elle seule la position du terminal 70. Ainsi, si le message était intercepté par une entité malveillante, cette dernière ne serait pas capable de déterminer la position du terminal 70 à partir du contenu du message intercepté.

Il convient de noter que le premier mode de mise en œuvre décrit ci-avant n'est qu'un exemple nullement limitatif, et que d'autres variantes sont par conséquent envisageables.

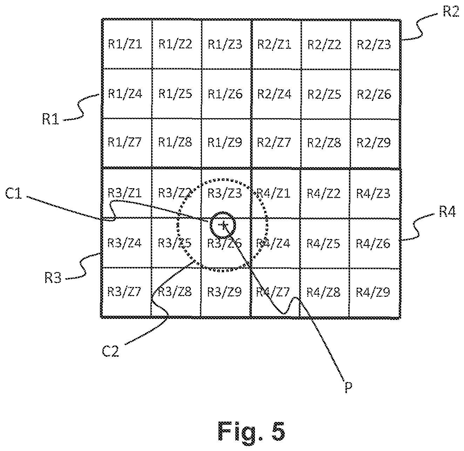

Par exemple, dans un deuxième mode de mise en œuvre, la position géographique du terminal 70 comporte un identifiant de région et un identifiant de zone. La figure 5 représente schématiquement un quadrillage d'un territoire géographique en différentes régions R1 à R4 et différentes zones Z1 à Z9. Le territoire est tout d'abord découpé en différentes régions R1 à R4 en forme de carré. Les différentes régions R1 à R4 ont toutes les mêmes dimensions. Chaque région est ensuite découpée en différentes zones Z1 à Z9. Elles sont elles aussi en forme de carré et présentent toutes des dimensions identiques. Tel qu'illustré sur la figure 5, les différentes zones Z1 à Z4 sont numérotées selon un schéma identique dans chaque région R1 à R4. Dans l'exemple représenté à la figure 5, il y a seulement quatre régions R1 à R4 et chaque région R1 à R4 comporte neuf zones Z1 à Z9. Il serait bien entendu envisageable d'utiliser un plus grand nombre de régions et/ou un plus grand nombre de zones et/ou des formes différentes de zone et/ou de région.

Dans ce deuxième mode de mise en œuvre, le terminal 70 possède un dispositif de positionnement qui permet de déterminer dans quelle région R1 à R4 et dans quelle zone Z1 à Z9 de cette région le terminal 70 est situé. Sur l'exemple représenté à la figure 5, le terminal 70 est situé à la position géographique exacte P dans la zone R3/Z6, et la précision du dispositif de positionnement du terminal 70 est telle que la position géographique précise dudit terminal 70 obtenue par le dispositif de positionnement est à l'intérieur du cercle C1. Sur cet exemple, la position géographique précise obtenue par le terminal 70 est donc soit R3/Z3 soit R3/Z6. La précision de l'estimation de la position géographique approximative du terminal 70 par le réseau d'accès 80 est telle qu'elle se trouve à l'intérieur du cercle C2. Sur cet exemple, la position géographique approximative obtenue par le terminal 70 est donc une parmi R3/Z2, R3/Z3, R4/Z1, R3/Z5, R3/Z6, R4/Z4 ou R3/Z9.

Chaque région R1 à R4 et chaque zone Z1 à Z9 possède par exemple un identifiant. Chaque identifiant de région R1 à R4 est unique, et chaque identifiant d'une zone Z1 à Z9 est unique au sein d'une même région R1 à R4. Dans l'exemple considéré, il est possible d'encoder un identifiant de région R1 à R4 sur deux bits (puisqu'il y a quatre valeurs différentes à encoder) et un identifiant de zone Z1 à Z9 sur quatre bits (puisqu'il y a 9 valeurs à encoder). Une position géographique peut être décomposée en deux parties : un identifiant de région et un identifiant de zone. Lorsque le terminal 70 se déplace, l'identifiant de zone varie plus rapidement que l'identifiant de région. L'information tronquée calculée par le terminal 70 correspond à l'identifiant de zone. Cette information tronquée est émise dans un message à destination du réseau d'accès 80.

Si la précision de l'estimation de la position géographique approximative est suffisante, le réseau d'accès 80 est alors capable de déterminer quelle région R1 à R4 et quelle zone Z1 à Z9 de cette région correspondent à la position géographique précise obtenue par le terminal 70 à partir d'une part de l'information tronquée émise par le terminal 70 et d'autre part de la position géographique approximative estimée par le réseau d'accès 80.

En effet, dans l'exemple considéré, il suffit que la précision de la position géographique approximative estimée par le réseau d'accès 80 soit telle que le cercle C2 présente un rayon inférieur à un côté d'une zone Z1 à Z9, de telle sorte que le cercle C2 ne peut pas inclure deux portions de zone Z1 à Z9 ayant le même identifiant. Le réseau d'accès 80 peut alors déterminer la position géographique précise du terminal 70 comme étant la zone Z1 à Z9 la plus proche de la position approximative estimée par le réseau d'accès 80 qui a le même identifiant de zone que celui correspondant à l'information tronquée émise par le terminal 70.

Là encore, le réseau d'accès 80 est capable de déterminer une position géographique précise du terminal 70 à partir d'une information tronquée émise par le terminal 70 et d'une position géographique approximative du terminal 70 estimée par le réseau d'accès 80.

La description ci-avant illustre clairement que, par ses différentes caractéristiques et leurs avantages, la présente invention atteint les objectifs fixés. En particulier, elle permet de déterminer la position géographique d'un terminal 70 d'un système 60 de communication sans fil de manière précise tout en limitant la quantité d'information échangée entre le terminal 70 et un réseau d'accès 80 dudit système 60 de communication.

L'invention s'applique particulièrement bien aux systèmes de communication sans fil de type IoT pour des applications nécessitant de la géolocalisation. L'invention peut néanmoins s'appliquer à d'autres types de systèmes de communication sans fil pour lesquels il peut être avantageux de limiter la taille des données émises par un terminal qui sont nécessaires au système pour le géolocaliser avec une précision suffisante.

**Revendications**

1. Procédé (10) de géolocalisation d'un terminal (70) d'un système (60) de communication sans fil, ledit système (60) de communication sans fil comprenant un réseau d'accès (80) configuré pour estimer une position géographique approximative dudit terminal (70), le terminal (70) comprenant un dispositif de positionnement permettant d'obtenir une position géographique précise du terminal (70) dont la précision est meilleure que la précision de la position géographique approximative estimée par le réseau d'accès (80), le procédé (10) étant **caractérisé en ce que** ledit procédé (10) comporte :

   - un calcul (11) par le terminal (70) d'une information tronquée de la position géographique précise en décomposant ladite position géographique précise en une première partie et une seconde partie, la première partie variant moins vite que la seconde partie lors d'un déplacement du terminal (70), l'information tronquée étant représentative de la seconde partie de la position géographique précise,
   - une émission (12) par le terminal (70) de l'information tronquée dans un message à destination du réseau d'accès (80),
   - une estimation (13) de la position géographique approximative du terminal (70) par le réseau d'accès (80),
   - une extraction (14) par le réseau d'accès de l'information tronquée à partir du message reçu en provenance du terminal (70),
   - une détermination (15) par le réseau d'accès (80) de la position géographique précise du terminal (70) à partir de l'information tronquée et de la position géographique approximative.

2. Procédé (10) selon la revendication 1 dans lequel la position géographique comprend une latitude et une longitude en tant que coordonnées géographiques.

3. Procédé (10) selon la revendication 2 dans lequel :

   - la latitude et la longitude correspondent chacune à une valeur encodée respectivement sur N et M bits,
   - la latitude $Lat_1$ et la longitude $Lng_1$ de la position géographique précise obtenue par le terminal (70) s'écrivent sous la forme :

$$Lat_1 = N_1 \times 2^n + n_1$$

$$Lng_1 = M_1 \times 2^m + m_1$$

où $N_1, n_1, n, M_1, m_1$ et m sont des nombres entiers positifs, $n_1$ et $m_1$ correspondant respectivement aux $n$ bits de poids faible de la latitude $Lat_1$ et aux m bits de poids faible de la longitude $Lng_1$ de la position géographique précise obtenue par le terminal (70),
   - la latitude $Lat_2$ et la longitude $Lng_2$ de la position géographique approximative estimée par le réseau d'accès (80) s'écrivent sous la forme :

$$Lat_2 = N_2 \times 2^n + n_2$$

$$Lng_2 = M_2 \times 2^m + m_2$$

où $N_2, n_2, M_2$ et $m_2$ sont des nombres entiers positifs, $n_2$ et $m_2$ correspondant respectivement aux $n$ bits de poids faible de la latitude $Lat_2$ et aux m bits de poids faible de la longitude $Lng_2$ de la position géographique approximative estimée par le réseau d'accès (80),
   - l'information tronquée comporte les $n$ bits de poids faible de la latitude $Lat_1$ et les m bits de poids faible de la longitude $Lng_1$ de la position géographique précise obtenue par le terminal (70),
   - la détermination par le réseau d'accès (80) de la position géographique précise du terminal (70) à partir de l'information tronquée et de la position géographique approximative comprend :

    ◦ une détermination de la latitude $Lat_1$ en fonction de $N_2$ et de $n_1$,
    ◦ une détermination de la longitude $Lng_1$ en fonction de $M_2$ et de $m_1$.

**4.** Procédé (10) selon la revendication 3 dans lequel :

    - les nombres $n$ et m sont choisis de sorte que la précision de la position géographique approximative estimée par le réseau d'accès est telle que quelle que soit la position géographique du terminal (70) les formules suivantes sont vérifiées :

$$|Lat_1 - Lat_2| < 2^{(n-1)}$$

$$|Lng_1 - Lng_2| < 2^{(m-1)}$$

    - la détermination par le réseau d'accès (80) de la position géographique précise du terminal (70) à partir de l'information tronquée et de la position géographique approximative comprend :

    ◦ une détermination de la latitude $Lat_1$ selon :

$$Lat_1 = \begin{cases} (N_2 + 1) \times 2^n + n_1 \ si \ (n_1 - n_2) \leq (-1) \times 2^{(n-1)} \\ (N_2 - 1) \times 2^n + n_1 \ si \ (n_1 - n_2) \geq 2^{(n-1)} \\ N_2 \times 2^n + n_1 \ sinon \end{cases}$$

    ◦ une détermination de la longitude $Lng_1$ selon :

$$Lng_1 = \begin{cases} (M_2 + 1) \times 2^m + m_1 \ si \ (m_1 - m_2) \leq (-1) \times 2^{(m-1)} \\ (M_2 - 1) \times 2^m + m_1 \ si \ (m_1 - m_2) \geq 2^{(m-1)} \\ M_2 \times 2^m + m_1 \ sinon \end{cases}$$

**5.** Procédé (10) selon l'une des revendications 1 à 4 dans lequel l'estimation (13) de la position géographique approximative par le réseau d'accès (80) est obtenue par une des méthodes suivantes :

    - une méthode de multilatération basée sur le temps de propagation d'un signal radio échangé entre le terminal (70) et le réseau d'accès (80),
    - une méthode de multilatération basée sur un niveau de puissance reçue pour un signal radio échangé entre le terminal (70) et le réseau d'accès (80),
    - une détermination de la position géographique du terminal (70) à partir de la position géographique d'une ou plusieurs stations de base (81) sous la couverture desquelles se trouve le terminal (70),
    - une méthode d'apprentissage automatique permettant d'associer une signature radio à une position géographique.

**6.** Procédé (10) selon l'une des revendications 1 à 5 dans lequel le réseau d'accès (80) est un réseau étendu sans fil basse consommation.

**7.** Terminal (70) d'un système (60) de communication sans fil comportant un dispositif de positionnement permettant d'obtenir une position géographique précise du terminal (70), le terminal (70) étant configuré pour :

    - calculer une information tronquée de la position géographique précise en décomposant ladite position géographique précise en une première partie et une seconde partie, la première partie variant moins vite que la seconde partie lors d'un déplacement du terminal (70), l'information tronquée étant représentative de la seconde partie de la position géographique précise,

- émettre l'information tronquée dans un message à destination d'un réseau d'accès (80) du système de communication sans fil.

**8.** Réseau d'accès (80) d'un système (60) de communication sans fil, ledit système (60) de communication sans fil comprenant un terminal (70) selon la revendication 7, le réseau d'accès étant configuré pour :

- estimer une position géographique approximative du terminal (70),
- extraire l'information tronquée à partir du message reçu en provenance du terminal (70),
- déterminer la position géographique précise du terminal (70) à partir de l'information tronquée et de la position géographique approximative.

**9.** Système (60) de communication sans fil comprenant un terminal selon la revendication 7 et un réseau d'accès selon la revendication 8.

**Patentansprüche**

**1.** Verfahren (10) zur Geolokalisierung eines Endgeräts (70) eines Drahtloskommunikationssystems (60), wobei das Drahtloskommunikationssystem (60) ein Zugriffsnetz (80) umfasst, das konfiguriert ist, um eine ungefähre geografische Position des Endgerätes (70) zu schätzen, wobei das Endgerät (70) eine Positionierungsvorrichtung umfasst, die es ermöglicht, eine präzise geografische Position des Endgeräts (70) zu erhalten, deren Präzision besser ist, als die Präzision der durch das Zugriffsnetz (80) geschätzten ungefähren geografischen Position, wobei das Verfahren (10) **dadurch gekennzeichnet ist, dass** das Verfahren (10) beinhaltet:

- eine Berechnung (11) durch das Endgerät (70) einer abgehackten Information der präzisen geografischen Position durch Zerlegen der präzisen geografischen Position in einen ersten Teil und einen zweiten Teil, wobei sich der erste Teil bei einer Verschiebung des Endgeräts (70) weniger schnell verändert, als der zweite Teil, wobei die abgehackte Information repräsentativ für den zweiten Teil der präzisen geografischen Position ist,
- eine Sendung (12) durch das Endgerät (70) der abgehackten Information in einer Nachricht an das Zugriffsnetz (80),
- eine Schätzung (13) der ungefähren geografischen Position des Endgerätes (70) durch das Zugriffsnetz (80),
- eine Extraktion (14) durch das Zugriffsnetz der abgehackten Information aus der von dem Endgerät (70) kommenden empfangenen Nachricht,
- eine Bestimmung (15) durch das Zugriffsnetz (80) der präzisen geografischen Position des Endgeräts (70) aus der abgehackten Information und der ungefähren geografischen Position.

**2.** Verfahren (10) nach Anspruch 1, wobei die geografische Position eine Breite und eine Länge als geografische Koordinaten umfasst.

**3.** Verfahren (10) nach Anspruch 2, wobei:

- die Breite und die Länge jeweils einem jeweils auf N und M Bits codierten Wert entsprechen,
- die Breite $Lat_1$ und die Länge $Lng_1$ der von dem Endgerät (70) erhaltenen präzisen geografischen Position wie folgt geschrieben werden:

$$Lat_1 = N_1 \times 2^n + n_1$$

$$Lng_1 = M_1 \times 2^m + m_1$$

wobei $N_1, n_1, n, M_1, m_1$ und m positive ganze Zahlen sind, wobei $n_1$ und $m_1$ jeweils den $n$ geringwertigen Bits der Breite $Lat_1$ und den $m$ geringwertigen Bits der Länge $Lng_1$ der vom Endgerät (70) erhaltenen präzisen geografischen Position entsprechen,
- die Breite $Lat_2$ und die Länge $Lng_2$ der von dem Zugriffsnetz (80) geschätzten ungefähren geografischen Position wie folgt geschrieben werden:

$$Lat_2 = N_2 \ x \ 2^n + n_2$$

$$Lng_2 = M_2 \ x \ 2^m + m_2$$

wobei $N_2$, $n_2$, $M_2$, $m_2$ und m positive ganze Zahlen sind, wobei $n_2$ und $m_2$ jeweils den $n$ geringwertigen Bits der Breite $Lat_2$ und den m geringwertigen Bits der Länge $Lng_2$ der von dem Zugriffsnetz (80) geschätzten ungefähren geografischen Position entsprechen,
- die abgehackte Information die $n$ geringwertigen Bits der Breite $Lat_1$ und den m geringwertigen Bits der Länge $Lng_1$ der vom Endgerät (70) erhaltenen präzisen geografischen Position beinhaltet,
- die Bestimmung durch das Zugriffsnetz (80) der präzisen geografischen Position des Endgeräts (70) aus der abgehackten Information und der ungefähren geografischen Position umfasst:

    ° eine Bestimmung der Breite $Lat_1$ in Abhängigkeit von $N_2$ und von $n_1$,
    ° eine Bestimmung der Länge $Lng_1$ in Abhängigkeit von $M_2$ und von $m_1$.

**4.** Verfahren (10) nach Anspruch 3, wobei:

    - die Zahlen $n$ und $m$ derart ausgewählt werden, dass die Präzision der durch das Zugriffsnetz geschätzten ungefähren geografischen Position derart ist, dass unabhängig von der geografischen Position des Endgeräts (70) die folgenden Formeln überprüft werden:

$$|Lat_1 - Lat_2| < 2^{(n-1)}$$

$$|Lng_1 - Lng_2| < 2^{(m-1)}$$

    - die Bestimmung durch das Zugriffsnetz (80) der präzisen geografischen Position des Endgeräts (70) aus der abgehackten Information und der ungefähren geografischen Position umfasst:

    ° eine Bestimmung der Breite $Lat_1$ gemäß:

$$Lat_1 = \begin{cases} (N_2 + 1) \ x \ 2^n + n_1 \ wenn \ (n_1 - n_2) \leq (-1)x \ 2^{(n-1)} \\ (N_2 - 1) \ x \ 2^n + n_1 \ wenn \ (n_1 - n_2) \geq 2^{(n-1)} \\ ansonsten \ N_2 \ x \ 2^n + n_1 \end{cases}$$

    ° eine Bestimmung der Länge $Lng_1$ gemäß:

$$Lng_1 = \begin{cases} (M_2 + 1) \ x \ 2^m + m_1 \ wenn \ (m_1 - m_2) \leq (-1) \ x \ 2^{(m-1)} \\ (M_2 - 1) \ x \ 2^m + m_1 \ wenn \ (m_1 - m_2) \geq 2^{(m-1)} \\ ansonsten \ M_2 \ x \ 2^m + m_1 \end{cases}$$

**5.** Verfahren (10) nach einem der Ansprüche 1 bis 4, wobei die Schätzung (13) der ungefähren geografischen Position durch das Zugriffsnetz (80) durch eine der folgenden Methoden erhalten wird:

    - eine Multilaterationsmethode basierend auf der Ausbreitungszeit eines Funksignals, das zwischen dem Endgerät (70) und dem Zugriffsnetz (80) ausgetauscht wird,
    - eine Multilaterationsmethode basierend auf einer empfangenen Leistungsstufe für ein Funksignal, das zwischen dem Endgerät (70) und dem Zugriffsnetz (80) ausgetauscht wird,
    - eine Bestimmung der geografischen Position des Endgeräts (70) aus der geografischen Position einer oder mehrerer Basisstationen (81), unter deren Abdeckung sich das Endgerät (70) befindet,
    - eine automatische Lernmethode, die es ermöglicht, eine Funksignatur einer geografischen Position zuzuordnen.

**6.** Verfahren (10) nach einem der Ansprüche 1 bis 5, wobei das Zugriffsnetz (80) ein erweitertes drahtloses Netz mit geringem Verbrauch ist.

**7.** Endgerät (70) eines Drahtloskommunikationssystems (60), welches eine Positionierungsvorrichtung beinhaltet, die es ermöglicht, eine präzise geografische Position des Endgeräts (70) zu erhalten, wobei das Endgerät (70) konfiguriert ist zum:

- Berechnen einer abgehackten Information der präzisen geografischen Position durch Zerlegen der präzisen geografischen Position in einen ersten Teil und einen zweiten Teil, wobei sich der erste Teil bei einer Verschiebung des Endgeräts (70) weniger schnell verändert, als der zweite Teil, wobei die abgehackte Information repräsentativ für den zweiten Teil der präzisen geografischen Position ist,
- Senden der abgehackten Information in einer Nachricht an ein Zugriffsnetz (80) des Drahtloskommunikationssystems.

**8.** Zugriffsnetz (80) eines Drahtloskommunikationssystems (60), wobei das Drahtloskommunikationssystem (60) ein Endgerät (70) nach Anspruch 7 umfasst, wobei das Zugriffsnetz konfiguriert ist zum:

- Schätzen einer ungefähren geografischen Position des Endgerätes (70),
- Extrahieren der abgehackten Information aus der von dem Endgerät (70) kommenden empfangenen Nachricht,
- Bestimmen der präzisen geografischen Position des Endgeräts (70) aus der abgehackten Information und der ungefähren geografischen Position.

**9.** Drahtloskommunikationssystem (60), umfassend ein Endgerät nach Anspruch 7 und ein Zugriffsnetz nach Anspruch 8.

**Claims**

**1.** Method (10) for geolocating a terminal (70) of a wireless communication system (60), said wireless communication system (60) comprising an access network (80) configured to estimate an approximate geographical position of said terminal (70), the terminal (70) comprising a positioning device for obtaining a precise geographical position of the terminal (70), the precision of which is better than the precision of the approximate geographical position estimated by the access network (80), the method (10) being **characterized in that** the method (10) includes:

- calculation (11) by the terminal (70) of truncated information on the precise geographical position by breaking down said precise geographical position into a first part and a second part, the first part varying less quickly than the second part when the terminal (70) moves, the truncated information representing the second part of the precise geographical position,
- transmission (12) by the terminal (70) of the truncated information in a message intended for the access network (80),
- estimation (13) of the approximate geographical position of the terminal (70) by the access network (80),
- extraction (14) by the access network of the truncated information from the message received coming from the terminal (70),
- determination (15) by the access network (80) of the precise geographical position of the terminal (70) from the truncated information and from the approximate geographical position.

**2.** Method (10) according to claim 1, wherein the geographical position comprises a latitude and a longitude as geographical coordinates.

**3.** Method (10) according to claim 2, wherein:

- the latitude and the longitude each correspond to a value encoded respectively in N and M bits,
- the latitude $Lat_1$ and the longitude $Lng_1$ of the precise geographical position obtained by the terminal (70) can be written in the form:

$$Lat_1 = N_1 \times 2^n + n_1$$

$$Lng_1 = M_1 \times 2^m + m_1$$

where $N_1$, $n_1$, $n$, $M_1$, $m_1$ and m are positive integer numbers, $n_1$ and $m_1$ corresponding respectively to the n least significant bits of the latitude $Lat_1$ and to the m least significant bits of the longitude $Lng_1$ of the precise geographical position obtained by the terminal (70),
- the latitude $Lat_2$ and the longitude $Lng_2$ of the approximate geographical position estimated by the access network (80) can be written in the form:

$$Lat_2 = N_2 \times 2^n + n_2$$

$$Lng_2 = M_2 \times 2^m + m_2$$

where $N_2$, $n_2$, $M_2$ and $m_2$ are positive integer numbers, $n_2$ and $m_2$ corresponding respectively to the $n$ least significant bits of the latitude $Lat_2$ and to the m least significant bits of the longitude $Lng_2$ of the approximate geographical position estimated by the access network (80),
- the truncated information includes the $n$ least significant bits of the latitude $Lat_1$ and the m least significant bits of the longitude $Lng_1$ of the precise geographical position obtained by the terminal (70),
- the determination by the access network (80) of the precise geographical position of the terminal (70) from the truncated information and from the approximate geographical position comprises:

◦ a determination of the latitude $Lat_1$ as a function of $N_2$ and of $n_1$,
◦ a determination of the longitude $Lng_1$ as a function of $M_2$ and of $m_1$.

4. Method (10) according to claim 3, wherein:

- the numbers $n$ and m are chosen so that the precision of the approximate geographical position estimated by the access network is such that, whatever the geographical position of the terminal (70), the following formulae are satisfied:

$$|Lat_1 - Lat_2| < 2^{(n-1)}$$

$$|Lng_1 - Lng_2| < 2^{(m-1)}$$

- the determination by the access network (80) of the precise geographical position of the terminal (70) from the truncated information and from the approximate geographical position comprises:

◦ a determination of the latitude $Lat_1$ in accordance with:

$$Lat_1 = \begin{cases} (N_2 + 1) \times 2^n + n_1 \ if \ (n_1 - n_2) \le (-1) \times 2^{(n-1)} \\ (N_2 - 1) \times 2^n + n_1 \ if (n_1 - n_2) \ge 2^{(n-1)} \\ N_2 \times 2^n + n_1 \ otherwise \end{cases}$$

◦ a determination of the longitude $Lng_1$ in accordance with:

$$Lng_1 = \begin{cases} (M_2 + 1) \times 2^m + m_1 \ if \ (m_1 - m_2) \leq (-1) \times 2^{(m-1)} \\ (M_2 - 1) \times 2^m + m_1 \ if \ (m_1 - m_2) \geq 2^{(m-1)} \\ M_2 \times 2^m + m_1 \ otherwise \end{cases}$$

5. Method (10) according to one of claims 1 to 4, wherein the estimation (13) of the approximate geographical position by the access network (80) is obtained by one of the following methods:

- a multilateration method based on the propagation time of a radio signal exchanged between the terminal (70) and the access network (80),
- a multilateration method based on a received power level for a radio signal exchanged between the terminal (70) and the access network (80),
- a determination of the geographical position of the terminal (70) from the geographical position of one or more base stations (81) in the coverage of which the terminal (70) is located,
- an automatic learning method for associating a radio signal with a geographical position.

6. Method (10) according to one of claims 1 to 5, wherein the access network (80) is a wireless low power wide area network.

7. Terminal (70) of a wireless communication system (60) including a positioning device for obtaining a precise geographical position of the terminal (70), the terminal (70) being configured to:

- calculate truncated information on the precise geographical position by breaking down said precise geographical position into a first part and a second part, the first part varying less quickly than the second part when the terminal (70) moves, the truncated information representing the second part of the precise geographical position,
- transmit the truncated information in a message intended for an access network (80) of the wireless communication system.

8. Access network (80) of a wireless communication system (60), said wireless communication system (60) comprising a terminal (70) according to claim 7, the access network being configured to:

- estimate an approximate geographical position of the terminal (70),
- extract the truncated information from the message received coming from the terminal (70),
- determine the precise geographical position of the terminal (70) from the truncated information and from the approximate geographical position.

9. Wireless communication system (60) comprising a terminal according to claim 7 and an access network according to claim 8.

Fig. 1

10

```
┌─────────┐
│         │
│  - 11 - │
│         │
└────┬────┘
     │
     ▼
┌─────────┐
│         │
│  - 12 - │
│         │
└────┬────┘
     │
     ▼
┌─────────┐
│         │
│  - 13 - │
│         │
└────┬────┘
     │
     ▼
┌─────────┐
│         │
│  - 14 - │
│         │
└────┬────┘
     │
     ▼
┌─────────┐
│         │
│  - 15 - │
│         │
└─────────┘
```

Fig. 2

$n_1$

$N_1-1$      $N_1$      $N_1+1$      $N_1+2$

**Fig. 3**

$I_1$

$I_2$

$n_1$

$N_1-1$      $N_1$      $N_1+1$      $N_1+2$

**Fig. 4**

$I_3$

$I_4$

| R1/Z1 | R1/Z2 | R1/Z3 | R2/Z1 | R2/Z2 | R2/Z3 |
| R1/Z4 | R1/Z5 | R1/Z6 | R2/Z4 | R2/Z5 | R2/Z6 |
| R1/Z7 | R1/Z8 | R1/Z9 | R2/Z7 | R2/Z8 | R2/Z9 |
| R3/Z1 | R3/Z2 | R3/Z3 | R4/Z1 | R4/Z2 | R4/Z3 |
| R3/Z4 | R3/Z5 | R3/Z6 | R4/Z4 | R4/Z5 | R4/Z6 |
| R3/Z7 | R3/Z8 | R3/Z9 | R4/Z7 | R4/Z8 | R4/Z9 |

Fig. 5

**EP 3 808 142 B1**

## RÉFÉRENCES CITÉES DANS LA DESCRIPTION

**Documents brevets cités dans la description**

- US 2017180928 A1